Europäisches Patentamt

European Patent Office

Office européen des brevets

(19)

(11) Veröffentlichungsnummer: **0 240 720**

**A1**

(12) # EUROPÄISCHE PATENTANMELDUNG

(21) Anmeldenummer: 87103059.9

(51) Int. Cl.⁴: **C04B 41/52**

(22) Anmeldetag: 04.03.87

(30) Priorität: 04.04.86 DE 3611273

(43) Veröffentlichungstag der Anmeldung:
14.10.87 Patentblatt 87/42

(84) Benannte Vertragsstaaten:
**BE DE ES FR GB IT NL**

(71) Anmelder: **Degussa Aktiengesellschaft
Weissfrauenstrasse 9
D-6000 Frankfurt am Main 1(DE)**

(72) Erfinder: **Lotze, Marion, Dr.
Am Galgenberg 18
D-6451 Hammersbach(DE)**
Erfinder: **Kleinschmit, Peter, Dr.
Wildaustrasse 19
D-6450 Hanau 9(DE)**

(54) **Verfahren zur Herstellung matter Edelmetalldekorationen.**

(57) Zur Herstellung, matter Edelmetalldekorationen
mittels Glanzedelmetallpräparaten auf Trägern aus
Keramik und Porzellan versieht man den Träger erst
mit einer Unterlageschicht, die sich zusammensetzt
aus:

    a) 50 bis 80 Gew.-% eines Gemisches von

    aa) 30 bis 80 Gew.-% einer bleifreien
Borosilikat-Glasurfritte mit

    bb) 20 bis 70 Gew.-% Titandioxidpulver und

    b) 20 bis 50 Gew.-% eines Gemisches aus

    aa) 40 bis 60 Gew.-% eines modifizierten
Alkydharzes mit einem Ölgehalt von 20 bis 40 Gew.-
% und einem Feststoffgehalt von 40 bis 60 Gew.-%
und

    bb) 40 bis 60 Gew.-% eines aromatischen
Kohlenwasserstoffs.

EP 0 240 720 A1

## Verfahren zur Herstellung matter Edelmetalldekorationen

Die Erfindung betrifft ein Verfahren zur Herstellung matter Edelmetalldekorationen auf Trägern aus Keramik und Porzellan ·mittels Glanzedelmetallpräparaten durch Aufbringen einer Unterlageschicht, bestehend aus einem Gemisch einer Glasurfritte, eines Oxids und eines Alkydharzes, zwischen Träger und Edelmetallschicht.

Zur Herstellung matter Edelmetalldekorationen verwendet man Präparate, die aus feinpulverigen Edelmetallen, Edelmetallverbindungen und Flußkomponenten bestehen. Dazu gehören die Polieredelmetallpräparate mit einem Edelmetallgehalt von 15 bis 60 Gewichts-%, die die Komponenten in einem Bindemittel/Lösungsmittel-Gemisch dispergiert enthalten und die Puderpräparate, die Edelmetallgehalte von 90 bis 100 Gewichts-% aufweisen. Glanzedelmetallpräparate in denen die Edelmetallverbindungen in gelöster Form vorliegen, meist in Form von Sulforesinaten,besitzen einen Edelmetallgehalt von 6 bis 15 Gewichts-% und ergeben nach dem Brennen bei 600 bis 900°C eine hochglänzende Dekoration.

Aus der DE-OS 3122546 ist ein Verfahren bekannt, mittels eines Glanzedelmetallpräperats auf Trägern aus Keramik und Porzellan eine matte Edelmetalldekoration herzustellen, indem man zwischen Träger und Edelmetallschicht eine Unterlageschicht aufbringt. Diese Unterlageschicht besteht aus einer Mischung einer Bleiborsilikat-Glasurfritte und einem Gemisch aus Zinndioxid, Zinkoxid, Aluminiumoxid, Eisenoxid und Chromoxid, angepastet mit einem Alkydharz mit einem Ölgehalt von 60 bis 70 %. Dieses Verfahren hat den Nachteil, daß mit einer physiologisch, bedenklich bleihaltigen Glasurfritte gearbeitet werden muß.

Es war daher Aufgabe der vorliegenden Erfindung, ein Verfahren zur Herstellung matter Edelmetalldekorationen auf Trägern aus Keramik und Porzellan mittels Glanzedelmetallpräparaten zu entwickeln, durch Aufbringen einer Unterlageschicht, bestehend aus einem Gemisch einer Glasurfritte, eines Oxids und eines Alkydharzes, zwischen Träger und Edelmetallschicht, bei dem auf den Einsatz einer bleihaltigen Glasurfritte verzichtet werden kann.

Diese Aufgabe wird erfindungsgemäß dadurch gelöst, daß die Unterlageschicht sich zusammensetzt aus:

a) 50 bis 80 Gew.-% eines Gemisches von 30 bis 80 Gew.-% einer bleifreien Borsilikat-Glasurfritte mit 20 bis 70 Gew.-% Titandioxidpulver und

b) 20 bis 50 Gew.-% eines Gemisches aus 40 bis 60 Gew.-% eines modifizierten Alkydharzes mit einem Ölgehalt von 20 bis 40 Gew.-% und einem Feststoffgehalt von 40 bis 60 Gew.-% mit 40 bis 60 Gew.-% eines aromatischen Kohlenwasserstoffs.

Als Glanzedelmetallpräparate können die handelsüblichen Glanzgold-Glanzzitronengold-, Glanzpalladium-und Glanzplatinpräparate eingesetzt werden. Als modifizierte Alkydharze sind vor allem acryl-, urethan-, vinyltolunol, styrol-und epoxidmodifizierte Alkydharze geeignet.

Vorzugsweise verwendet man Borsilikat-Glasurfritten, die 45 bis 65 % Siliziumdioxid, 10 bis 25 % Boroxid ($B_2O_3$), 5 bis 15 % Aluminiumoxid, 5 bis 10 % Alkalioxid, 5 bis 10 % Kalziumoxid, 0 bis 5 % Magnesiumoxid und 0 bis 2 % Zinkoxid enthalten.

Die Teilchengröße der Glasurfritte und des Titandioxids liegt vorteilhafterweise zwischen 3 und 5 $\mu$ im Mittel.

Als aromatische Kohlenwasserstoffe haben sich vor allem xylole und Trimethylbenzole bewährt. Ansonsten können auch andere auf dem Gebiet der keramischen Farben bekannte Lösungsmittel Verwendung finden.

Mit Hilfe des erfindungsgemäßen Verfahrens erzielt man auch mit Glanzedelmetallpräparaten matte Dekorationen auf Keramik und Porzellan, ohne bleihaltigen Glasurfritten verwenden zu müssen.

Folgende Beispiele sollen das erfindungsgemäße Verfahren näher erläutern:

1. Auf einer Porzellanscherbe wurde ein Unterlageschicht aufgedruckt, die aus 45 Gew.-% einer Glasurfritte, 30 Gew.-% Titandioxid, 8 Gew.-% Alkydharz (acrylmodifiziert, Ölgehalt 40 Gew.-%) und 17 Gew.-% eines aromatischen Kohlenwasserstoffs (Shellsol AB) enthielt. Die Glasurfritte bestand aus 46 Gew.-% $SiO_2$, 23 Gew.-% $B_2O_3$, 13 Gew.-% $Al_2O_3$, 1 Gew.-% ZnO, 7 Gew.-% CaO, 4 Gew.-% MgO und 6 Gew.-% $Na_2O$. Nach dem Antrocknen wurde ein handelsübliches Glanzgoldpräparat aufgedruckt. Nach dem Brennen erhält man ein mattes Golddekor.

2. Analog Beispiel 1 wird eine Unterlageschicht verwendet, die aus 40 Gew.-% Glasurfritte, 35 Gew.-% Titandioxid, 6 Gew.-% Alkydharz (epoxidmodifiziert, Ölgehalt 30 %) und 19 Gew.-% eines Xylolgemisches besteht. Die Glasurfritte enthält 63 Gew.-% $SiO_2$, 13 Gew.-% $B_2O_3$, 8 Gew.-% $Al_2O_3$, 1 Gew.% ZnO, 8 Gew.-% CaO und 7 Gew.-% $Na_2O$. Auch hier erhält man ein mattes Golddekor.

Die Dekoration kann auch mittels eines keramischen Abziehbildes übertragen werden.

**Ansprüche**

1. Verfahren zur Herstellung matter Edelmetalldekorationen auf Trägern aus Keramik und Porzellan mittels Glanzedelmetallpräparaten durch Aufbringen einer Unterlageschicht, bestehend aus einem Gemisch einer Glasurfritte, eines Oxids und eines Alkydharzes, zwischen Träger und Edelmetallschicht, dadurch gekennzeichnet, daß die Unterlageschicht sich zusammensetzt aus:

a) 50 bis 80 Gew.% eines Gemisches von
aa) 30 bis 80 Gew.% einer bleifreien Borosilikatglasurfritte mit
bb) 20 bis 70 Ges.% Titandioxidpulver und
b) 20 bis 50 Gew.% eines Gemisches aus
aa) 40 bis 60 Gew.% eines modifizierten Alkydharzes mit einem Ölgehalt von 20 bis 40 Gew.% und einem Feststoffgehalt von 40 bis 60 Gew.% mit
bb) 40 bis 60 Gew.% eines aromatischen Kohlenwasserstoffs.

2. Verfahren nach Anspruch 1, dadurch gekennzeichnet, daß die Glasurfritte 45 bis 65 Gew.% Siliziumdioxid, 10 bis 25 Gew.% Boroxid ($B_2O_3$), 5 bis 15 Gew.% Aluminiumoxid, 5 bis 10 Gew.% Kalziumoxid, O bis 5 Gew.% Magnesiumoxid und O bis 2 Gew.% Zinkoxid enthält.

3. Verfahren nach Ansruch 1 oder 2, dadurch gekennzeichnet, daß als modifizierte Alkydharze acryl-, urethan-, vinyltolunol-, styrol-und epoxidmodifizierte Alkydharze verwendet werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | GB-A-2 099 760 (W.C. HERAEUS GmbH) <br> * Ansprüche 1,2,7; Seite 1, Zeilen 7-12; Beispiel * | 1,3 | C 04 B 41/52 |
| Y | CHEMICAL ABSTRACTS, Band 93, Nr. 16, 20. Oktober 1980, Seite 284, Zusammenfassung Nr. 154736b, Columbus, Ohio, US; & JP-A-80 37 409 (NARUMI CHINA CORP.) 15-03-1980 | 1,3 | |
| A | CHEMICAL ABSTRACTS, Band 89, Nr. 14, 2. Oktober 1978, Seite 463, Zusammenfassung Nr. 116697z, Columbus, Ohio, US; & JP-A-78 18 611 (NIPPON KINEKI K.K.) 21-02-1978 | 1,2 | |
| | | | RECHERCHIERTE SACHGEBIETE (Int. Cl.4) |
| A | DE-C- 712 854 (O. EHRHART) <br> * Ansprüche 1-3; Seite 1, Spalte 1, Zeilen 1-5; Seite 2, Spalte 1, Zeilen 24-31,60 - Seite 2, Spalte 2, Zeile 65; Seite 2, Spalte 2, Zeilen 93-97 * | 1,2 | C 04 B 33/00 <br> C 04 B 41/00 <br> B 44 C 1/00 |

Der vorliegende Recherchenbericht wurde für alle Patentansprüche erstellt.

| Recherchenort | Abschlußdatum der Recherche | Prüfer |
|---|---|---|
| DEN HAAG | 18-05-1987 | HAUCK, H.N. |